(19) Europäisches Patentamt
European Patent Office
Office européen des brevets

(11) **EP 1 283 499 B1**

(12) **EUROPEAN PATENT SPECIFICATION**

(45) Date of publication and mention
of the grant of the patent:
**21.07.2010  Bulletin 2010/29**

(51) Int Cl.:
*G06T 7/20* *(2006.01)*       *G01S 3/786* *(2006.01)*
*H04N 5/14* *(2006.01)*

(21) Application number: **02255507.2**

(22) Date of filing: **07.08.2002**

(54) **Moving object tracking apparatus and method**

Gerät und Verfahren zum Verfolgen eines sich bewegenden Objekts

Dispositif et méthode de poursuite d'un objet en mouvement

(84) Designated Contracting States:
**DE GB IT NL**

(30) Priority:   **07.08.2001   KR 2001047410**

(43) Date of publication of application:
**12.02.2003   Bulletin 2003/07**

(60) Divisional application:
**09174915.0**

(73) Proprietor: **SAMSUNG ELECTRONICS CO., LTD.**
**Suwon-si,**
**Gyeonggi-do 442-742 (KR)**

(72) Inventors:
• **Cho, Jae-soo**
**Paldal-gu,**
**Suwon-city,**
**Gyunggi-do (KR)**
• **Iizuka, Hiroshi,**
**517-1604 Shinnamooshil**
**Suwong-city,**
**Gyunggi-do (KR)**
• **Tanaka, Kazuhiro,**
**322-901 Samik Apartment**
**Paldal-gu,**
**Suwon-city,**
**Gyunggi-do (KR)**

(74) Representative: **Walaski, Jan Filip et al**
**Venner Shipley LLP**
**20 Little Britain**
**London**
**EC1A 7DH (GB)**

(56) References cited:
**WO-A-01/84844        KR-A-2001 0 000 107**
**US-A- 5 867 584**

• **PATENT ABSTRACTS OF JAPAN vol. 1997, no. 01, 31 January 1997 (1997-01-31) & JP 08 249450 A (FUJITSU LTD), 27 September 1996 (1996-09-27)**
• **G. HALEVY ET AL.: 'Motion of disturbances: detection and tracking of multi-body' vol. 11(3), 1999, pages 122 - 137**

EP 1 283 499 B1

**Description**

The present invention relates to a method of tracking a moving object with a camera and to a tracking system comprising a camera and processing means configured to process image signals from the camera.

There are various types of tracking systems worldwide for automatically detecting and tracking moving objects based on input image information.

The following are a few representative examples of tracking methods applied in such tracking systems that track the moving object through the input image information. Tracking based on a difference signal between two frames. Tracking based on a correlation (block matching algorithm). Tracking based on a disturbance map, for example, as disclosed in G. Halevy et al., "Motion of disturbances : detection and tracking of multi-body non rigid motion," Machine Vision and Applications, 11(3): 122-137, 1999. Tracking based on a colour distribution. Tracking based on an optical slow.

Despite some advantages, most of the currently available tracking methods including the above are difficult to commercialise due to problems especially in terms of speed and accuracy.

KR-A-10-2000-22818 (publication no. KR 2001-0000107) discloses a moving object tracking and monitoring system, which combines various tracking methods.

The moving object tracking and monitoring system includes a general monitoring device and a local monitoring device. The general monitoring device has a fixed camera monitoring a wide area and registers and tracks all the moving objects within a predetermined monitoring range. For a certain moving object among the registered moving objects, the general monitoring device transmits a tracking command to the local monitoring device to track the certain moving object, and, thus, the local monitoring device keeps tracking the certain moving object until the certain moving object escapes out of the monitoring range.

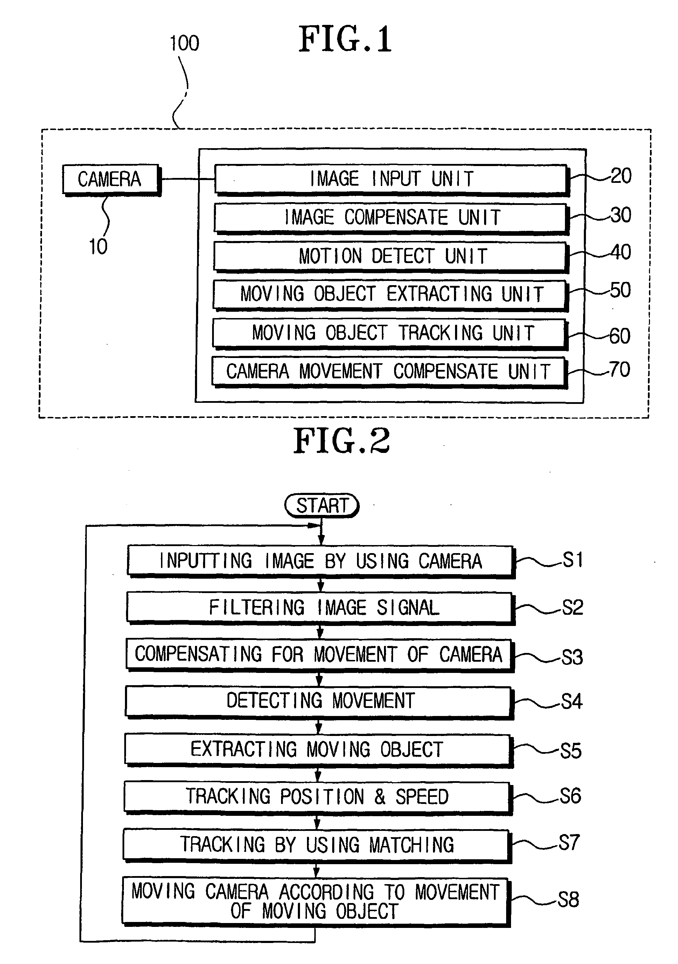

Figure 1 is a block diagram showing a local monitoring device of a moving object tracking and monitoring system.

A local monitoring device 100 includes a camera 10, an image input unit 20 for receiving input signals corresponding to images from the camera 10, an image compensation unit 30 for eliminating a noise factor from the input image signal, a motion detecting unit 40 for detecting the movement of the moving object based on a disturbance map from the compensated input image signal, a moving object extracting unit 50 for separating the moving object from the input image signal, a moving object tracking unit 60 for tracking the moving object based on extracted position and speed information for the moving object and a camera movement compensation unit 70 for compensating for the input image signal in accordance with a movement of the camera 10.

The operation of the local monitoring device 100, constructed as described above, will be now be described below with reference to the flowchart in Figure 2.

First, when the images captured by the camera 10 are input into the image input unit 20 in operation S1, the image compensate unit 30 filters the input image signals to eliminate noise factors therefrom in operation S2, and the camera movement compensation unit 70 compensates for the input image signal according to the movement of the camera 10 in operation S3. Next, with respect to the compensated input image signal, the motion detecting unit 40 detects the movement of the moving object using a disturbance map algorithm in operation S4. The moving object extracting unit 50 extracts an actual image of the moving object using division and composition of the images in a motion area extracted by the disturbance map in operation S5. Then, the moving object extracting unit 50 estimates a next location for the moving object by applying the extracted location and speed information for the moving object to an estimating algorithm that uses a Kalman filter, and then tracks the moving object in operation S6. When the moving object stops and thus there is no further movement, or when it becomes hard to track the moving object because many objects' paths cross one another, the tracking is continued by using a block matching process in operation S7. As the movement of the moving object is detected, the camera 10 is moved in accordance with the movement of the moving object in operation S8. After that, the tracking of the moving object includes repeating the above processes.

In this moving object tracking and monitoring system, many algorithms could be used, and among them, the disturbance map algorithm is a representative example that is used to automatically acquire or extract the information about the moving object. For the purpose of the tracking of the moving object, a block matching algorithm is used.

In a conventional moving object tracking system, the exaction performance based on a disturbance map algorithm is satisfactory when the camera is in a static state. However, when the camera is in motion, image compensation is inevitably required. For this purpose, the conventional art uses a camera compensation algorithm, which results in an increased amount of data to be processed by the system and consequent overload in data processing.

A block matching algorithm, which has been used for tracking the moving object, also degrades a data processing speed because a size of a block increases as the moving object is moved, and because the size, shape or brightness changes.

US-A-5867584 discloses a object tracking system for tracking images of objects in a pre-recorded video sequence.

A method according to the present invention is defined in claim 1 analysing said selected portion to determine the correctness of said prediction and, if said correctness does not meet a predetermined criterion, searching the whole of said further image signal for said moving object.

A tracking system according to the present invention is defined in claim 12.

Other optional and preferred features are set forth in claims 2 to 11, 13 and 14 appended hereto.

Embodiments of the present invention will now be described, by way of example, with reference to Figures 3 to 12 of the accompanying drawings, in which:

Figure 1 is a block diagram of a moving object tracking device;

Figure 2 is a flowchart illustrating the operation of the moving object tracking device of Figure 1;

Figure 3 is a block diagram of a moving object tracking device according to the present invention;

Figure 4 is a detailed block diagram showing the binary disturbance image generating unit in the moving object tracking device of Figure 3;

Figure 5 is a flowchart illustrating the method of tracking a moving object used in the moving object tracking device of Figures 3 and 4;

Figure 6 illustrates the concept of a moving window in the moving object tracking device and method of Figures 3 to 5;

Figure 7 shows a moving object acquiring process in the moving object tracking device and method of Figures 3 to 5;

Figure 8 shows a process of automatically tracking the moving object in the moving object tracking device and method of Figures 3 to 5;

Figure 9 shows a camera control process and an image signal process on a basis of time division in the moving object tracking device and method of Figures 3 to 5;

Figure 10 shows another embodiment of the camera control process and the image signal process of Figure 9 ; and

Figure 11 shows an full image being divided into a camera pan/tilt control area and a non camera pan/tilt control area in the moving object tracking device and method of Figures 3 to 5; and

Figure 12 shows the full image divided according to a size of a tracking window, into a camera zoom-in/zoom-out control area and a non-camera zoom-in/zoom-out control area in the moving object tracking device and method of Figures 3 to 5.

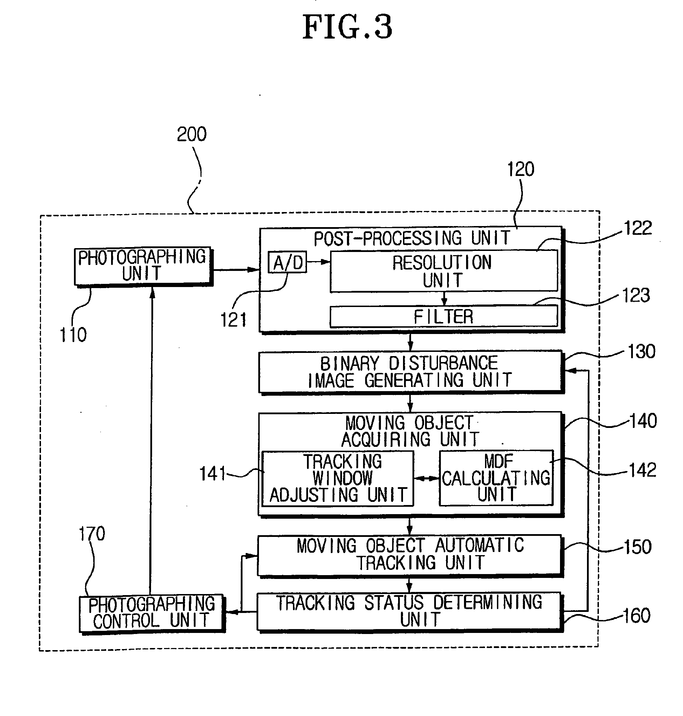

Referring to Figure 3, a moving object tracking device 200 includes an image capture unit 110, an input image pre-processing unit 120, a binary disturbance image generating unit 130, a moving object acquiring unit 140, a moving object automatic tracking unit 150, a tracking status determining unit 160 and an image capture control unit 170.

The image capture unit 110 images a monitored area and outputs an analogue image signal the scene in the monitored area.

The input image pre-processing unit 120 includes an analogue-to-digital (A/D) converter 121 for converting the analogue image signal into a digital input image signal for the acquisition of desired information, such as a centre value and the size of the moving object, from the entire input image signal within a short period, a resolution adjusting unit 122 for adjusting the resolution of the input image signal, and a filter 123 for filtering various types of noise from the input image after resolution adjustment.

The binary disturbance image generating unit 130 transforms the input image signal into a binary disturbance image signal through a disturbance map algorithm so as to separate out a background image and a moving object image from the pre-processed input image.

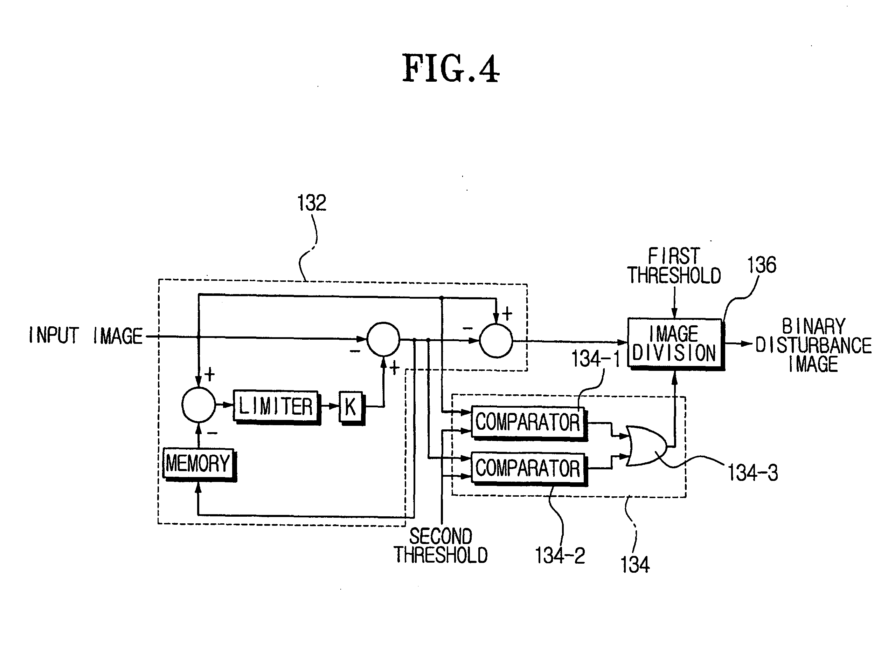

Referring to Figure 4, the binary disturbance image generating unit 130 includes a recursive filter 132 for obtaining a disturbance field from a currently input image signal and an average of previously input image signals, and an image division unit 136 for outputting a binary disturbance image signal with respect to each pixel upon comparing an absolute value of the disturbance field obtained by the recursive filter 132 with a first disturbance threshold. The binary disturbance image generating unit 130 further includes a headlight preventing unit 134 for modifying the determination of a binary value of the binary disturbance image signal for each pixel so as to prevent particular surrounding factors, such as a car headlight, causing an incorrect determination on the moving object .

The headlight preventing unit 134 includes a first comparator 134-1 and a second comparator 134-2 for comparing the input image signal and the disturbance field of the current frame with a second disturbance threshold and an OR gate 134-3 for ORing the output values from the first and second comparators 134-1, 134-2.

When the moving object acquiring unit 140 acquires information about a moving object in a first tracking operation, or in a further attempt after the first tracking operation has failed, the moving object acquiring unit 140 acquires the centre value and the size of the moving object using a tracking window. For this purpose, the moving object acquiring unit 140 includes a motion disturbance function (MDF) calculating unit 142 for calculating a motion disturbance function (MDF) value for each of the pixels in a predetermined range, based on a moving window concept that uses an initial tracking window having a predetermined size, and a tracking window adjusting unit 141 that searches for a pixel having the greatest MDF value and adjusts the size of the initial tracking window by calculating the centre and the size of the moving object within an actual tracking window with reference to the pixel having the greatest MDF value. The MDF calculating unit 142 adds binary co-ordinate values of the initial tracking window from first to final coordinates and determines a sum of the co-ordinates as the MDF value for the pixel at the centre co-ordinates. The information about the centre of the moving object is used for a pan/tilt control signal to control the image capture unit 110 while the information about the size of the moving object is used for a zoom-in/zoom-out control signal to control the image capture unit 110.

The moving object automatic tracking unit 150 estimates a next location in a following frame, where the centre of the moving object is to be moved, based on current and previous acquired information, moves the centre of the size-adjusted tracking window to the estimated next location and acquires the information on the centre of the moving object in the following frame in the size-adjusted tracking window and the information on the size of the size-adjusted tracking window. In other words, only the image signal corresponding to the moving object within the size-adjusted tracking window is processed in the following frame.

The tracking status determining unit 160 compares the information of an actual image of the moving object, acquired from the following frame, with the estimated information on the moving object to generate a resultant error range, and determines a tracking status for the moving object, based on the resultant error range. Alternatively, the tracking status determining unit 160 could determine the tracking status by monitoring a number of binary disturbance image signals for pixels disposed in the size-adjusted tracking window. When the error in the tracking status is within a predetermined range, the moving object automatic tracking unit 150 continues tracking the moving object using signal processing exclusively on an area of the size-adjusted tracking window. However, if the error exceeds the predetermined range, the moving object acquiring unit 140 re-acquires information about the moving object from the whole of the input image and repeats the automatic tracking processes.

The image capture control unit 170 controls an image capture direction of the image capture unit 110 in the estimated direction of movement of the moving object when the centre of the tracking window is located outside the predetermined range with respect to the entire input image. The image capture control unit 170 also controls zoom-in/zoom-out of the image capture unit 110 so that the size of the tracking window at the estimated pixel and the size of the moving object acquired from the following frame can be maintained at a certain rate. Both the image capture control, such as pan/tilt control, the zoom-in/zoom-out control and the movement of the image capture control unit 170, and the signal processing of the input image are performed on a time-division basis.

A method of tracking a moving object implemented in the moving object tracking device 200 of Figures 3 and 4 will now be described.

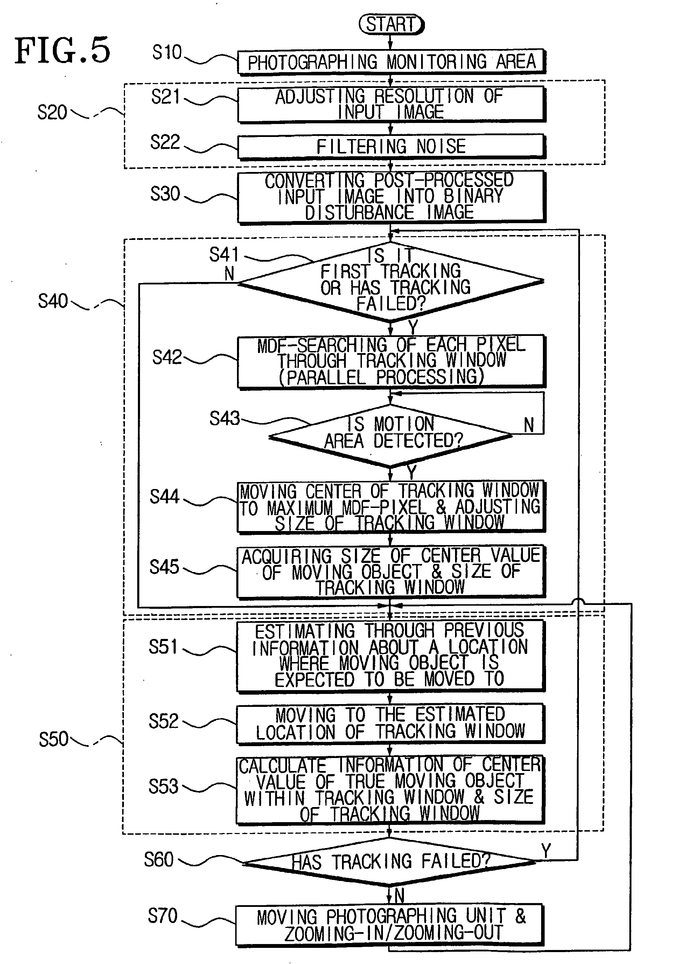

Referring to Figure 5, the system first acquires an analogue image signal by capturing the scene in a monitored area using the image capture unit 110 in operation S10. Then the system pre-processes the acquired image signal in operation S20 to generate the input image signal. The pre-processing in operation S20 includes adjusting the resolution of the input image signal so as to increase the signal processing speed in operation S21, and filtering the input image signal, after resolution adjustment, so as to eliminate noise from the input image signal in operation S22. After the pre-processing operation in operation S20, the input image signal is transformed into a binary disturbance image signal using a disturbance map algorithm in operation S30.

The disturbance map algorithm generates a disturbance field $\Delta_t$ using the difference between the currently input image $I_t$ and the background image $A_t$ (average image $A_{t-1}$ of previously input images) and detects the "motion area" corresponding to the moving object on the basis of the disturbance field $D_t$. For this purpose, the background image $A_t$ is generated when a historical weight $\omega$ is applied on the average image $A_{t-1}$ of the previously input images. The binary disturbance image signal and the background image are obtained with respect to the current frame by:

$$\Delta_t = I_t - A_{t-1}$$

$$\text{(1)}$$

$$A_t = I_t - K \cdot LIM(I_t - A_{t-1})$$

where $\Delta_t$ is a disturbance of a current frame, $A_t$ is either a background image or an average image of current frames, $A_{t-1}$ is either a background image or an average image of previous frames, $I_t$ is a currently input image, $K$ is a gain, and $LIM$ is a limiter.

The disturbance map algorithm has a value '1' in the motion area where the object is moving, and has a value '0' in a motionless area. In other words, when the absolute value of the binary disturbance image signal for each pixel exceeds a predetermined threshold, it is determined to be in the motion area, and if the absolute value is below the predetermined threshold, it is determined to be in the motionless area.

Then each signal of the disturbance field of the binary disturbance image signal from (1) is divided based on first and second thresholds. The image is divided such that the motion area has the value '1' while the motionless area has the value '0'.

The transformed binary disturbance image signal is displayed in white in the motion area and in black in the background area (motionless area). Meanwhile, in this embodiment of the present invention, the output from the headlight preventing unit 136 is used as a parameter that determines the binary values of the respective pixels so as to prevent inaccurate (incorrect) determination with respect to the motion area due to the headlights of an automobile, etc.

When the input image signal is converted into the binary disturbance image signal, the moving object acquiring unit 140 acquires from the binary disturbance image signal information about the centre and the size of the moving object from the initial tracking window, which has a predetermined size, in operation S40. In other words, the moving object acquiring unit 140 acquires the information about the centre of the moving object and the size of the tracking window in the area of the full image where the moving object is located. For the information about the moving object, MDF values for the respective pixels are calculated in the binary disturbance image signal, based on the concept of a moving window, in operation S42.

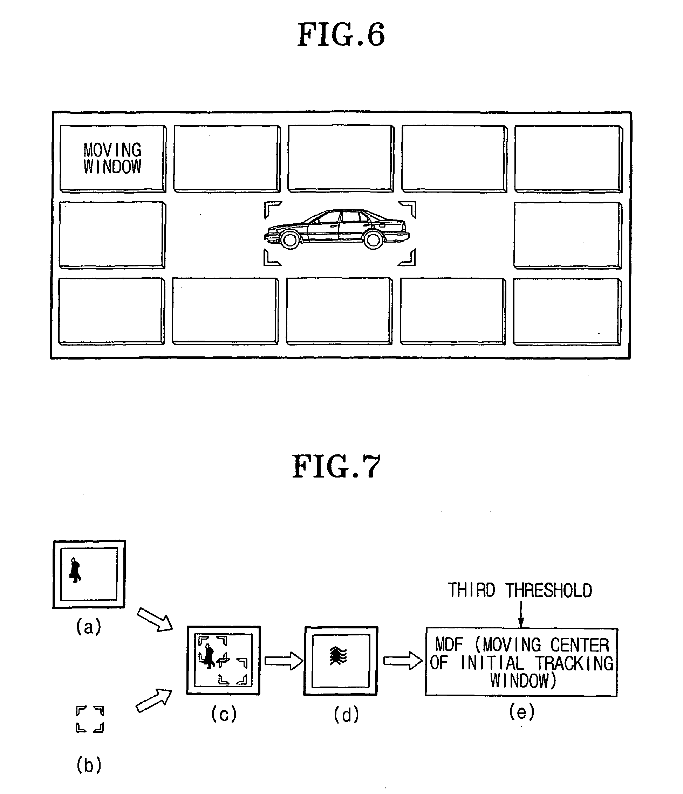

Referring to Figure 6, the moving window, which has a predetermined size, has each pixel as centre co-ordinates and searches the MDF values for each pixel of the input image. The sum of the binary values of pixels in the moving window is determined as a certain value, i.e. the MDF value of the pixel located at the centre co-ordinates.

The moving windows are identical to the initial tracking windows in size and are generated in number less than a total number of the pixels. The sums obtained by adding up the binary values of the coordinates from the initial to the final co-ordinates within the respective initial tracking windows, are determined as the MDF values of respective moving windows and the respective pixels located at the centre co-ordinates. For real-time operation, the searching of the MDF values with respect to each pixel is preferably performed in parallel.

The MDF of each pixel through the moving window is calculated by:

$$MDF(p,q) = \sum_{x \in MW} \sum_{y \in MW} B(x+p, y+q) \qquad (2)$$

where $M1_{xc} \le p \le Mn_{xc}$, $M1_{yc} \le p \le Mn_{yc}$, MDF is a motion disturbance function, p, q is a coordinate of a certain pixel in the entire input image, x, y is a coordinate of a certain pixel within a moving window, MW is a moving window, $M1_{xc}$, $M1_{yc}$ is a centre co-ordinate in the moving window containing an initial coordinate of the entire input image, $Mn_{xc}$, $Mn_{yc}$ is a centre coordinate in the moving window containing the final coordinate of the entire input image and B(Binary) is a binary disturbance image signal.

Referring Figure 7, the MDF values of different pixels (c) are calculated using a plurality of initial tracking windows (b) with respect to the binary disturbance image (a). Then the MDF field with respect to the moving object (d) is detected . If the greatest MDF value equals or is greater than a third threshold, the centre of the initial tracking window is positioned at the pixel having the greatest MDF value.

Then the size of the initial tracking window is adjusted so that the initial tracking window includes the moving object and then the centre co-ordinates of the moving object in the size-adjusted tracking window and the size of the tracking window (e) are calculated . If the MDF value is below the third threshold, it is determined that there is no moving object in operation S43 of Figure 5. The centre co-ordinates of the moving object in the tracking window is obtained by:

$$x_e = \frac{\sum_{(x,y) \in TW} x \cdot B(x - P_L, y - q_L)}{\sum_{(x,y \in TW)} B(x - p_L, y - q_L)} \qquad (3)$$

$$y_e = \frac{\sum y \cdot B(x - p_L, y - q_L)}{\sum_{(x,y \in TW)} B(x - p_L, y - q_L)}$$

where $x_e$, $y_e$ are the centre co-ordinates of the moving object in the tracking window, TW is a tracking window, x, y are the certain co-ordinates in the tracking window, B is the binary disturbance image signal, and $p_L$, $q_L$ are the co-ordinates of a spot where the MDF value is greatest in the whole of the input image.

As described above, the size of the moving object can be calculated by calculating a centre value for the actual moving object in the tracking window. The size of the tracking window can also be adjusted based on a size ratio of the moving object and the tracking window. The occupancy ratio of the moving object to adjust the size of the tracking window is calculated by the following expression:

$$Occupancy \quad rate = \frac{Moving \quad Object \quad Size}{Tracking \quad Window \quad Size} \qquad (4)$$

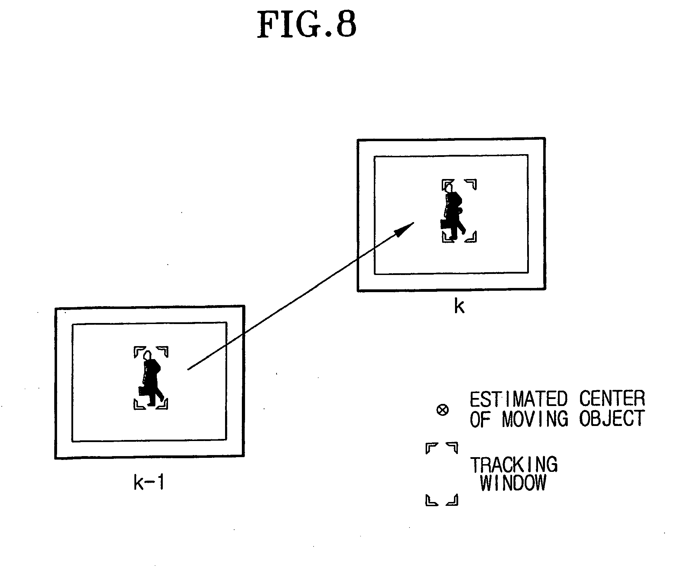

When a moving object is detected and the size of the tracking window is adjusted, the location of the moving object is estimated and the moving object is tracked automatically in operation S50 of Figure 5. In other words, based on the acquired information about the current and previous centres of the moving object, the next location of the moving object is estimated in the following frame in operation S51, and the centre of the size-adjusted tracking window is disposed at the estimated location in operation S52. Figure 8 shows the tracking window being re-located to the estimated location of the moving object in the following frame based on the previously acquired information. Next, information about the true center of the moving object of the following frame in the tracking window and information about the size of the tracking window are acquired in operation S53. When the information about the actual moving object has been acquired in the following frame, the acquired information is compared with the estimated information, and the tracking status is determined according to the error range of the comparison in operation S60. When the error range is within a predetermined limit, the moving object automatic tracking unit 150 keeps tracking the moving object while performing signal processing only with respect to the area of the tracking window. If the error rate exceeds the predetermined limit, the moving object acquiring unit 140 re-acquires information about the moving object from the entire input image.

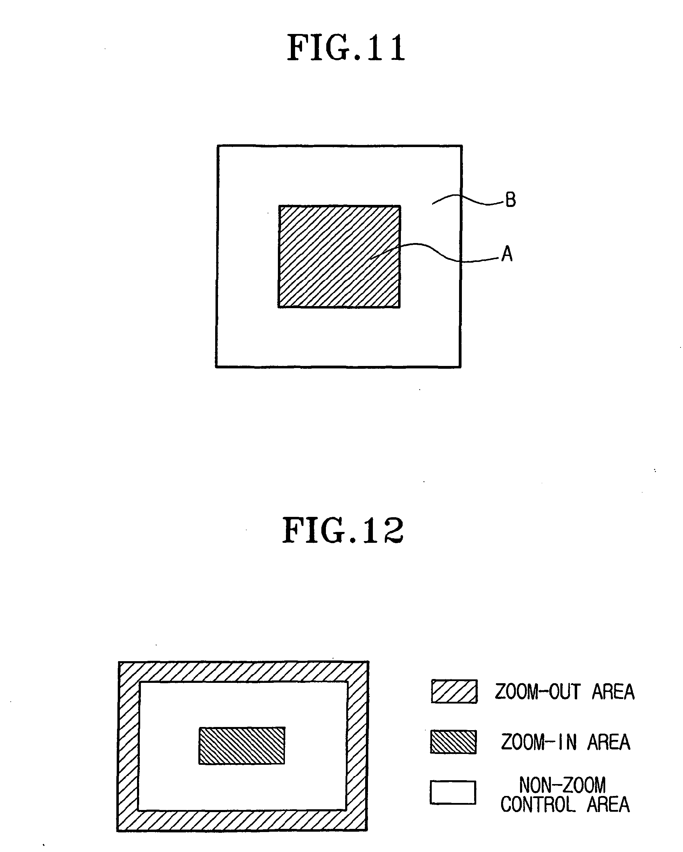

If the error range of the tracking status is within the predetermined limit, it is determined that the tracking of the moving object is performed well and the system controls the movement, the zoom-in/zoom-out and the pan/tilt of the image capture unit 110 in operation S70. If the centre of the tracking window is located outside the predetermined range in the entire input image, the system changes the image capture direction of the image capture unit 110 to the estimated direction of the moving object. Furthermore, when the centre of the tracking window is located within a predetermined region A of the entire input image area B as shown in Figure 11, the system is controlled so that the pan/tilt control is not performed. The system also controls the zoom-in/zoom-out automatically, so that the size of the tracking window and the moving object can be maintained at a certain ratio, according to the size of the actual moving object that is acquired from the following frame of the tracking window. As shown in Figure 12, the system can either perform or omit the process of the zoom-in/zoom-out control depending on the location of the moving object in the input image. Accordingly, an unnecessarily shaky image due to excessive control can be prevented while reliability of the system for tracking moving objects is improved.

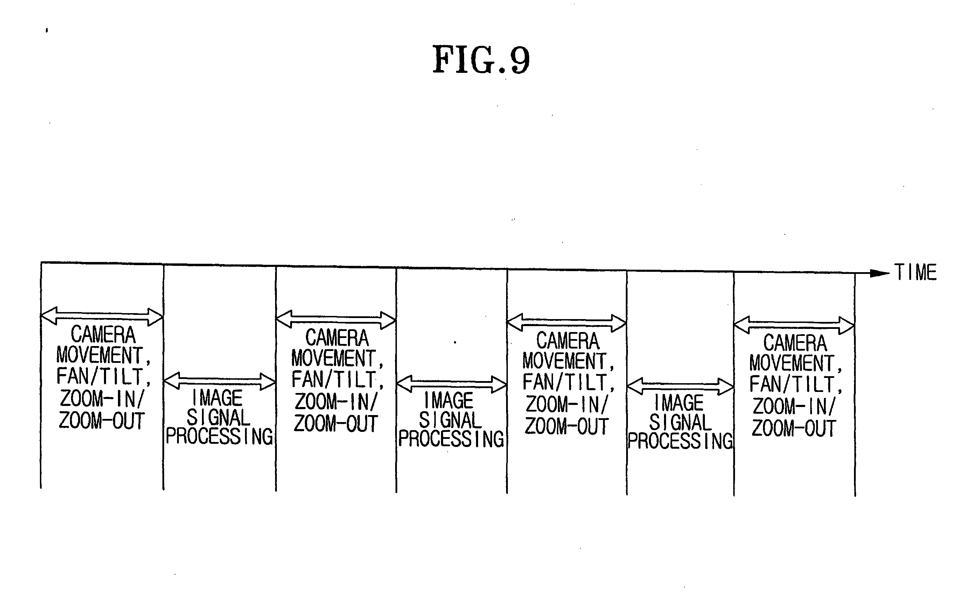

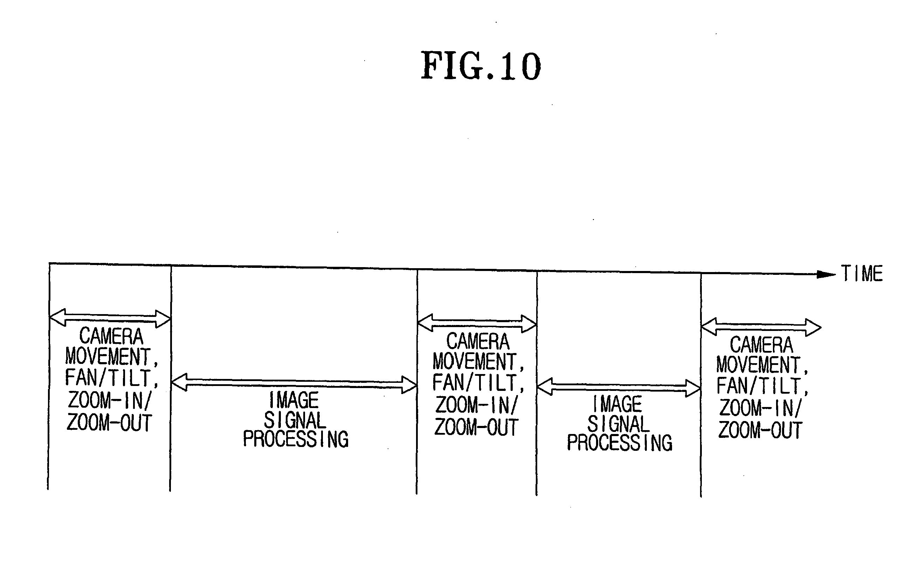

The control of the image capture unit 110 and the signal processing with respect to the input image are performed on the time-division basis as shown in Figure 9. Accordingly, no image compensation is required for the movement of the image capture unit 110 (camera). Figure 10 shows the control of the image capture unit 110 and the image signal processing according to another embodiment of the present invention, which provides a sufficient time for the initial image signal process of acquiring information about the moving object.

As a result, the automatic moving object tracking device and method thereof processes even a smallest sized image through the use of the tracking window.

Further, by using the time-division for the control of the camera such as camera movement, the zoom-in/zoom-out and the pan/tilt, and also for the image signal process, image compensation for the movement of the camera can be avoided.

Further, the inaccurate determination on the motion area due to the headlight of the automobile can be prevented through the use of the headlight preventing unit 134.

Further, an accurate pan/tilt control can be achieved by the center value of the moving object, and the moving object can be automatically zoomed-in/zoomed-out based on the size of the moving object and the size of the tracking window. Such zoom-in/zoom-out control can be very useful in circumstances like when a numeral and a character in a license plate of an automobile parked in a parking lot is checked.

With the automatic moving object tracking device and method thereof according to the present invention, a minimum amount of images is processed during the tracking of the moving object. Accordingly, the processing speed increases while influences on the moving object due to interferences with the other objects can be minimized.

Further, since the image compensation for the movement of camera can be omitted according to the present invention, a complex signal process in accordance with the tracking of the moving object is simplified.

Further, the inaccurate determination on the moving object due to changes in the background such as headlight from the automobile can be prevented.

Further, since the pan/tilt and zoom-in/zoom-out is controlled very accurately with respect to the moving object, the moving object can be clearly recognized while a monitoring result on the monitored area is checked.

**Claims**

1. A method of tracking a moving object, comprising:

   filming a monitored area using a camera (10);
   generating a binary disturbance image signal from an input image signal acquired from the camera (10) representing a sequence of frames;
   acquiring from the binary disturbance image signal information about the moving object using a moving window, having a predetermined size, as an initial tracking window;
   adjusting the size of the initial tracking window so that the binary disturbance image signal contains the moving object;
   predicting information about the location of the moving object in a subsequent frame to which the centre of the moving object is to move based on currently acquired information and previously acquired information about the centre of the moving object;
   moving the centre of the tracking window to the location where the centre of the moving object is predicted to move to;
   acquiring actual information from the subsequent frame about an actual centre of the moving object in the tracking window and the size of the tracking window; and
   comparing the actual information about the moving object with the predicted information about the moving object, and determining the tracking status of the moving object based on a resultant error range of the predicted and actual information further comprising:
   performing zoom operations on the camera so that the size of the tracking window located at the predicted location and the size of the moving object acquired from the subsequent frame are maintained at a certain ratio.

2. A method according to claim 1, comprising pre-processing the input image signal to improve the speed of subsequent processing and reduce noise in the image signal.

3. A method according to claim 2, wherein the pre-processing comprises:

   reducing the resolution of the input image signal; and
   eliminating noise from the input image signal having the reduced resolution.

4. A method according to any one of the preceding claims, wherein the step of generating the binary disturbance image signal comprises:

   generating a disturbance field through a difference between the input image signal and an average of previous frames;
   comparing the input image signal with a threshold and the average with the threshold to perform a logic operation on a result of the comparison; and
   determining a binary value for each pixel according to a result of comparing an absolute value of each pixel of the disturbance field with a disturbance threshold and also according to the result of the logic operation.

5. A method according to any one of the preceding claims, wherein the step of acquiring information about the moving object comprises :

   positioning the initial tracking window so that each pixel is recognizable with a centre coordinate in the binary disturbance image signal;
   determining a moving disturbance function MDF value of a pixel by adding up binary values of initial through last coordinates in the tracking window ; and
   adjusting a size of the tracking window so that the moving object is included in the input image signal with respect to a coordinate of a pixel having a greatest MDF value in the binary disturbance image signal.

6. A method according to claim 5, wherein the step of determining the MDF value comprises calculating MDF values for pixels in parallel with each other.

7. A method according to claim 5, wherein the step of acquiring information about the moving object determines that a moving object does not exist when the binary value of the coordinate of the pixel having the greatest MDF value is smaller than an MDF threshold.

8. A method according to any one of the preceding claims, wherein the step of determining the tracking status comprises re-acquiring from the entire input image signal the information about the moving object with respect to the subsequent frame when the error range exceeds a predetermined limit.

9. A method according to any one of the preceding claims, further comprising:

controlling the camera to move a photographing direction of the camera to a predicted direction to which the moving object is predicted to be moved when the centre of the tracking window is located outside of a predetermined range with respect to the entire input image signal of the monitored area.

10. A method according to any one of the preceding claims, wherein the photographing control of the camera and the signal processing of the input image signal are both performed on a time-division basis.

11. A method according to any one of the preceding claims, wherein the control of the camera is discontinued when the tracking window is located within the predetermined range with respect to the entire input image area.

12. A tracking system comprising a camera (10) and processing means (120, 130, 140, 150, 160) configured to process image signals from the camera (10), **characterised in that** the processing means (120, 130, 140, 150, 160) is configured for causing the system to perform a method according to any preceding claim.

13. A tracking system according to claim 12, wherein the processing means includes a binary disturbance image generating unit (130) comprising:

a first subtractor for subtracting a previous input image signal from the current input image signal;
a second subtractor for subtracting the output of the first subtractor from the current input image signal;
a third subtractor for subtracting the output of the second subtractor from the current input image signal; and
an image division unit (136) for comparing the output of the third subtractor with a reference value to generate the binary disturbance image signal.

14. A tracking system according to claim 13, wherein the binary disturbance image generating unit (130) comprises:

a limiter for limiting the output of the first subtractor to generate a fourth output; and
a gain controller (K) for controlling the gain of the output of the limiter, the output of the gain controller (K) being subtracted from the current input image signal by the second subtractor to generate the second subtractor's output.

**Patentansprüche**

1. Verfahren zum Verfolgen eines sich bewegenden Objekts, umfassend:

Filmen eines überwachten Bereichs mit einer Kamera (10);
Erzeugen eines binären Störungsbildsignals aus einem eingegebenen Bildsignal, das von der Kamera (10) erhalten wurde und eine Abfolge von Rahmen repräsentiert;
Ermitteln von Informationen von dem binären Störungsbildsignal über das sich bewegende Objekt unter Verwendung eines sich bewegenden Fensters mit einer im Voraus bestimmten Größe als ein anfängliches Verfolgungsfenster;
Anpassen der Größe des anfänglichen Verfolgungsfensters derart, dass das binäre Störungsbildsignal das sich bewegende Objekt enthält;
Vorhersagen von Informationen über die Position des sich bewegenden Objekts in einem nachfolgenden Rahmen, zu der sich die Mitte des sich bewegenden Objekts zu bewegen hat, basierend auf gegenwärtig ermittelten Informationen und vorher ermittelten Informationen über die Mitte des sich bewegenden Objekts;
Bewegen der Mitte des Verfolgungsfensters zu der Position, zu der die Mitte des sich bewegenden Objekts sich gemäß Vorhersage zu bewegen hat;
Ermitteln von tatsächlichen Informationen von dem nachfolgenden Rahmen über eine tatsächliche Mitte des sich bewegenden Objekts in dem Verfolgungsfenster und der Größe des Verfolgungsfensters; und
Vergleichen der tatsächlichen Informationen über das sich bewegende Objekt mit den vorhergesagten Informationen über das sich bewegende Objekt und Bestimmen des Verfolgungsstatus des sich bewegenden Objekts basierend auf einem resultierenden Fehlerbereich der vorhergesagten und tatsächlichen Informationen, weiter umfassend:

Durchführen von Zoomoperationen an der Kamera, so dass die Größe des Verfolgungsfensters, das sich an der vorhergesagten Position befindet, und die Größe des sich bewegenden Objekts, die aus dem nachfolgenden Rahmen ermittelt wird, in einem bestimmten Verhältnis gehalten werden.

2. Verfahren nach Anspruch 1, umfassend, das eingegebene Bildsignal zu vorverarbeiten, um die Geschwindigkeit der nachfolgenden Verarbeitung zu verbessern und Störungen in dem Bildsignal zu reduzieren.

3. Verfahren nach Anspruch 2, wobei die Vorverarbeitung umfasst:

Reduzieren der Auflösung des eingegebenen Bildsignals; und
Beseitigen von Störungen aus dem eingegebenen Bildsignal mit der reduzierten Auflösung.

4. Verfahren nach einem der vorstehenden Ansprüche, wobei der Schritt des Erzeugens des binären Störungsbildsignals umfasst:

Erzeugen eines Störungsfelds durch eine Differenz zwischen dem eingegebenen Bildsignal und einem Durchschnitt von vorherigen Rahmen;
Vergleichen des eingegebenen Bildsignals mit einem Schwellenwert und des Durchschnitts mit dem Schwellenwert, um eine logische Operation mit einem Ergebnis des Vergleichs durchzuführen; und
Bestimmen eines binären Werts für jeden Bildpunkt gemäß einem Ergebnis des Vergleichs eines Absolutwerts von jedem Bildpunkt des Störungsfelds mit einem Störungsschwellenwert und auch gemäß dem Ergebnis der logischen Operation.

5. Verfahren nach einem der vorstehenden Ansprüche, wobei der Schritt des Ermittelns von Informationen über das sich bewegende Objekt umfasst:

Positionieren des anfänglichen Verfolgungsfensters derart, dass jeder Bildpunkt mit einer Mittenkoordinate in dem binären Störungsbildsignal erkennbar ist;
Bestimmen eines Störungsbewegungsfunktions-(MDF)-Werts eines Bildpunkts durch Aufaddieren von binären Werten von anfänglichen bis letzten Koordinaten in dem Verfolgungsfenster; und
Anpassen einer Größe des Verfolgungsfensters derart, dass das sich bewegende Objekt in dem eingegebenen Bildsignal in Bezug auf eine Koordinate eines Bildpunkts mit einem größten MDF-Wert in dem binären Störungsbildsignal enthalten ist.

6. Verfahren nach Anspruch 5, wobei der Schritt des Bestimmens des MDF-Werts umfasst, MDF-Werte für Bildpunkte parallel miteinander zu berechnen.

7. Verfahren nach Anspruch 5, wobei der Schritt des Ermittelns von Informationen über das sich bewegende Objekt bestimmt, dass ein sich bewegendes Objekt nicht existiert, wenn der binäre Wert der Koordinate des Bildpunkts mit dem größten MDF-Wert kleiner als ein MDF-Schwellenwert ist.

8. Verfahren nach einem der vorstehenden Ansprüche, wobei der Schritt des Bestimmens des Verfolgungsstatus umfasst, die Informationen über das sich bewegende Objekt von dem gesamten eingegebenen Bildsignal in Bezug auf den nachfolgenden Rahmen neu zu ermitteln, wenn der Fehlerbereich eine im Voraus bestimmte Grenze überschreitet.

9. Verfahren nach einem der vorstehenden Ansprüche, weiter umfassend:

Steuern der Kamera, um eine fotografische Richtung der Kamera zu einer vorhergesagten Richtung zu bewegen, in die sich das sich bewegende Objekt gemäß Vorhersage zu bewegen hat, wenn die Mitte des Verfolgungsfensters außerhalb eines im Voraus bestimmten Bereichs in Bezug auf das gesamte eingegebene Bildsignal des überwachten Bereichs angeordnet ist.

10. Verfahren nach einem der vorstehenden Ansprüche, wobei die fotografische Steuerung der Kamera und die Signalverarbeitung des eingegebenen Bildsignals beide auf einer Zeitmultiplexbasis ausgeführt werden.

**11.** Verfahren nach einem der vorstehenden Ansprüche, wobei die Steuerung der Kamera ausgesetzt wird, wenn das Verfolgungsfenster innerhalb des im Voraus bestimmten Bereichs in Bezug auf den gesamten eingegebenen Bildbereich angeordnet ist.

**12.** Verfolgungssystem, umfassend eine Kamera (10) und ein Verarbeitungsmittel (120, 130, 140, 150, 160), das konfiguriert ist, um Bildsignale von der Kamera (10) zu verarbeiten, **dadurch gekennzeichnet, dass** das Verarbeitungsmittel (120, 130, 140, 150, 160) konfiguriert ist, um zu bewirken, dass das System ein Verfahren nach einem der vorstehenden Ansprüche ausführt.

**13.** Verfolgungssystem nach Anspruch 12, wobei das Verarbeitungsmittel eine Einheit (130) zum Erzeugen eines binären Störungsbilds enthält, umfassend:

einen ersten Subtrahierer zum Subtrahieren eines vorherigen eingegebenen Bildsignals von dem gegenwärtigen eingegebenen Bildsignal;
einen zweiten Subtrahierer zum Subtrahieren des Ausgangs des ersten Subtrahierers von dem gegenwärtigen eingegebenen Bildsignal;
einen dritten Subtrahierer zum Subtrahieren des Ausgangs des zweiten Subtrahierers von dem gegenwärtigen eingegebenen Bildsignal; und
eine Bildteilungseinheit (136) zum Vergleichen des Ausgangs des dritten Subtrahierers mit einem Bezugswert, um das binäre Störungsbildsignal zu erzeugen.

**14.** Verfolgungssystem nach Anspruch 13, wobei die Einheit (130) zum Erzeugen eines binären Störungsbilds umfasst:

einen Begrenzer zum Begrenzen des Ausgangs des ersten Subtrahierers, um einen vierten Ausgang zu erzeugen; und
eine Verstärkungssteuerung (K) zum Steuern der Verstärkung des Ausgangs des Begrenzers, wobei der Ausgang der Verstärkungssteuerung (K) durch den zweiten Subtrahierer von dem gegenwärtigen eingegebenen Bildsignal subtrahiert wird, um den Ausgang des zweiten Subtrahierers zu erzeugen.

**Revendications**

**1.** Procédé de suivi d'un objet mouvant, comprenant :

le filmage d'une zone surveillée avec une caméra (10) ;
la génération d'un signal d'image de perturbation binaire à partir d'un signal d'image d'entrée acquis par la caméra (10) représentant une séquence de trames ;
l'acquisition à partir du signal d'image de perturbation binaire d'informations relatives à l'objet mouvant au moyen d'une fenêtre mobile, d'une taille prédéterminée, comme fenêtre de suivi initiale ;
le réglage de la taille de la fenêtre de suivi initiale de telle sorte que le signal d'image de perturbation binaire contienne l'objet mouvant ;
la prédiction d'informations au sujet de l'emplacement de l'objet mouvant dans une trame ultérieure jusqu'auquel le centre de l'objet mouvant doit se rendre en fonction des informations actuellement acquises et d'informations précédemment acquises sur le centre de l'objet mouvant ;
le déplacement du centre de la fenêtre de suivi jusqu'à la position où il est prédit que le centre de l'objet mobile doit se rendre ;
l'acquisition d'informations réelles à partir de la trame ultérieure sur un centre de l'objet mouvant dans la fenêtre de suivi et la taille de la fenêtre de suivi ; et
la comparaison des informations réelles sur l'objet mouvant aux informations prédites sur l'objet mouvant, et la détermination de l'état de suivi de l'objet mouvant en fonction d'une plage d'erreurs résultante des informations prédites et réelles, comprenant en outre :

l'exécution d'opérations de zoom sur la caméra de telle sorte que la taille de la fenêtre de suivi située à l'emplacement prédit et la taille de l'objet mouvant acquises à partir de la trame ultérieure soient maintenues à un certain rapport.

**2.** Procédé selon la revendication 1, comprenant le prétraitement du signal d'image d'entrée pour améliorer la vitesse du traitement ultérieur et réduire le bruit dans le signal d'image.

**3.** Procédé selon la revendication 2, dans lequel le prétraitement comprend :

la réduction de la résolution du signal d'image d'entrée ; et
l'élimination du bruit du signal d'image d'entrée de résolution réduite.

**4.** Procédé selon l'une quelconque des revendications précédentes, dans lequel l'étape de génération du signal d'image de perturbation binaire comprend :

la génération d'un champ de perturbation par une différence entre le signal d'image d'entrée et une moyenne de trames antérieures ;
la comparaison du signal d'image d'entrée à un seuil et de la moyenne au seuil afin d'effectuer une opération logique sur un résultat de la comparaison ; et
la détermination d'une valeur binaire de chaque pixel en fonction d'un résultat de comparaison d'une valeur absolue de chaque pixel du champ de perturbation à un seuil de perturbation et aussi en fonction du résultat de l'opération logique.

**5.** Procédé selon l'une quelconque des revendications précédentes, dans lequel l'étape d'acquisition d'informations sur l'objet mouvant comprend :

le positionnement de la fenêtre de suivi initiale de telle sorte que chaque pixel soit reconnaissable avec une coordonnée centrale dans le signal d'image de perturbation binaire ;
la détermination d'une valeur de fonction de perturbation mouvante MDF d'un pixel en ajoutant des valeurs binaires de coordonnées initiale à dernière dans la fenêtre de suivi ; et
le réglage d'une taille de la fenêtre de suivi de telle sorte que l'objet mouvant soit inclus dans le signal d'image d'entrée relativement à une coordonnée d'un pixel ayant la plus grande valeur MDF dans le signal d'image de perturbation binaire.

**6.** Procédé selon la revendication 5, dans lequel l'étape de détermination de la valeur MDF comprend le calcul de valeurs MDF de pixels parallèles les uns aux autres.

**7.** Procédé selon la revendication 5, dans lequel l'étape d'acquisition d'informations sur l'objet mouvant détermine qu'un objet mouvant n'existe pas quand la valeur binaire de la coordonnée du pixel ayant la plus grande valeur MDF est inférieure à un seuil MDF.

**8.** Procédé selon l'une quelconque des revendications précédentes, dans lequel l'étape de détermination de l'état de suivi comprend la réacquisition à partir du signal d'image d'entrée complet des informations sur l'objet mouvant relativement à la trame ultérieure quand la plage d'erreurs dépasse une limite prédéterminée.

**9.** Procédé selon l'une quelconque des revendications précédentes, comprenant en outre :

la commande de la caméra pour déplacer un sens de photographie de la caméra jusqu'à un sens prédit vers lequel il est prédit que l'objet mouvant doit être déplacé quand le centre de la fenêtre de suivi est situé en dehors d'une plage prédéterminée relativement au signal d'image d'entrée complet de la zone surveillée.

**10.** Procédé selon l'une quelconque des revendications précédentes, dans lequel la commande photographique de la caméra et le traitement de signal du signal d'image d'entrée sont tous les deux effectués selon le principe de la répartition dans le temps.

**11.** Procédé selon l'une quelconque des revendications précédentes, dans lequel la commande de la caméra est discontinue quand la fenêtre de suivi est située dans la plage prédéterminée par rapport à la zone d'image d'entrée complète.

**12.** Système de suivi comprenant une caméra (10) et un moyen de traitement (120, 130, 140, 150, 160) configurés pour traiter des signaux d'image provenant de la caméra (10),
**caractérisé en ce que** le moyen de traitement (120, 130, 140, 150,160) est configuré pour amener le système à exécuter un procédé selon l'une quelconque des revendications précédentes.

**13.** Système de suivi selon la revendication 12, dans lequel le moyen de traitement comprend une unité de génération d'image de perturbation binaire (130) comprenant :

un premier soustracteur pour soustraire un signal d'image d'entrée antérieur du signal d'image d'entrée courant ;
un deuxième soustracteur pour soustraire la sortie du premier soustracteur du signal d'image d'entrée courant ;
un troisième soustracteur pour soustraire la sortie du deuxième soustracteur du signal d'image d'entrée courant ; et
un module de division d'image (136) pour comparer la sortie du troisième soustracteur à une valeur de référence afin de générer le signal d'image de perturbation binaire.

14. Système de suivi selon la revendication 13, dans lequel le module de génération d'image de perturbation binaire (130) comprend :

un limiteur pour limiter la sortie du premier soustracteur afin de générer une quatrième sortie ; et
une unité de commande de gain (K) pour commander le gain de la sortie du limiteur, la sortie de l'unité de commande de gain (K) étant soustraite du signal d'image d'entrée courant par le second soustracteur afin de générer la sortie du deuxième soustracteur.

# FIG.1

100

| | |
|---|---|
| CAMERA | |
| 10 | |

IMAGE INPUT UNIT — 20

IMAGE COMPENSATE UNIT — 30

MOTION DETECT UNIT — 40

MOVING OBJECT EXTRACTING UNIT — 50

MOVING OBJECT TRACKING UNIT — 60

CAMERA MOVEMENT COMPENSATE UNIT — 70

# FIG.2

START

INPUTTING IMAGE BY USING CAMERA — S1

FILTERING IMAGE SIGNAL — S2

COMPENSATING FOR MOVEMENT OF CAMERA — S3

DETECTING MOVEMENT — S4

EXTRACTING MOVING OBJECT — S5

TRACKING POSITION & SPEED — S6

TRACKING BY USING MATCHING — S7

MOVING CAMERA ACCORDING TO MOVEMENT OF MOVING OBJECT — S8

13

# FIG.3

# FIG.4

INPUT IMAGE

132

LIMITER → K

MEMORY

SECOND
THRESHOLD

COMPARATOR

COMPARATOR

134-1

134-2    134

134-3

FIRST
THRESHOLD

136

IMAGE
DIVISION

BINARY
DISTURBANCE
IMAGE

EP 1 283 499 B1

**FIG.5**

START

S10 — PHOTOGRAPHING MONITORING AREA

S20 —
- S21 — ADJUSTING RESOLUTION OF INPUT IMAGE
- S22 — FILTERING NOISE

S30 — CONVERTING POST-PROCESSED INPUT IMAGE INTO BINARY DISTURBANCE IMAGE

S40 —

S41 — IS IT FIRST TRACKING OR HAS TRACKING FAILED?  N

S42 — MDF-SEARCHING OF EACH PIXEL THROUGH TRACKING WINDOW (PARALLEL PROCESSING)

S43 — IS MOTION AREA DETECTED?  N

Y

S44 — MOVING CENTER OF TRACKING WINDOW TO MAXIMUM MDF-PIXEL & ADJUSTING SIZE OF TRACKING WINDOW

S45 — ACQUIRING SIZE OF CENTER VALUE OF MOVING OBJECT & SIZE OF TRACKING WINDOW

S50 —

S51 — ESTIMATING THROUGH PREVIOUS INFORMATION ABOUT A LOCATION WHERE MOVING OBJECT IS EXPECTED TO BE MOVED TO

S52 — MOVING TO THE ESTIMATED LOCATION OF TRACKING WINDOW

S53 — CALCULATE INFORMATION OF CENTER VALUE OF TRUE MOVING OBJECT WITHIN TRACKING WINDOW & SIZE OF TRACKING WINDOW

S60 — HAS TRACKING FAILED?  Y

N

S70 — MOVING PHOTOGRAPHING UNIT & ZOOMING-IN/ZOOMING-OUT

# FIG.6

# FIG.7

# FIG.8

k-1

k

⊗  ESTIMATED CENTER
   OF MOVING OBJECT

┌ ┐
      TRACKING
       WINDOW
└ ┘

# FIG.9

CAMERA MOVEMENT, FAN/TILT, ZOOM-IN/ ZOOM-OUT — IMAGE SIGNAL PROCESSING — CAMERA MOVEMENT, FAN/TILT, ZOOM-IN/ ZOOM-OUT — IMAGE SIGNAL PROCESSING — CAMERA MOVEMENT, FAN/TILT, ZOOM-IN/ ZOOM-OUT — IMAGE SIGNAL PROCESSING — CAMERA MOVEMENT, FAN/TILT, ZOOM-IN/ ZOOM-OUT

TIME

EP 1 283 499 B1

# FIG.10

EP 1 283 499 B1

TIME →

| CAMERA MOVEMENT, FAN/TILT, ZOOM-IN/ ZOOM-OUT | IMAGE SIGNAL PROCESSING | CAMERA MOVEMENT, FAN/TILT, ZOOM-IN/ ZOOM-OUT | IMAGE SIGNAL PROCESSING | CAMERA MOVEMENT, FAN/TILT, ZOOM-IN/ ZOOM-OUT |

# FIG.11

# FIG.12

ZOOM-OUT AREA

ZOOM-IN AREA

NON-ZOOM
CONTROL AREA

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 10200022818 A
- KR 20010000107

- US 5867584 A

**Non-patent literature cited in the description**

- **G. Halevy et al.** Motion of disturbances : detection and tracking of multi-body non rigid motion. *Machine Vision and Applications,* 1999, vol. 11 (3), 122-137